# EUROPEAN PATENT APPLICATION

(11) **EP 2 998 921 A1**
(43) Date of publication of application: **23.03.2016**
(21) Application number: 15184546.8
(22) Date of filing: 09.09.2015
(51) Int. Cl.: G06Q 30/02, G06Q 20/32

(54) **BEACON DEVICE FOR FACILITATION OF GRATUITOUS TRANSACTIONS**

(30) Priority: 16.09.2014 US 201414487482
(71) Applicant: Bell, Brian P., Wake Forest, NC 27587 (US)
(72) Inventor: Bell, Brian P., Wake Forest, NC 27587 (US)
(74) Representative: Ström & Gulliksson AB

(57) **Abstract**

A method of initiating an unsolicited, gratuitous transaction with an entity using a mobile device to receive a signal including identification indicia from a beacon device. The beacon device may transmit such a signal in response to a polling signal from the mobile device or independently. Once communication is established, an unsolicited transaction may be completed, either in the form of a performance rating, a message, or monetary donation through a third party intermediary.

## Description

### TECHNICAL FIELD

Example embodiments generally relate to techniques for facilitating gratuitous transactions and, in particular, relate to apparatuses (and/or methods executable by configured apparatuses) that are configured for employing the same.

### BACKGROUND

A typical sales transaction begins with the solicitation by a vendor to sell goods or services to a customer. Upon agreement of a price, the vendor of the goods and/or services initiates the financial transaction through a billing system (or cash register/check-out station) and the customer completes the transaction through payment, credit card swipe, and/or signature.

However, in certain scenarios a person may wish to initiate a gratuitous transaction by identifying a recipient and providing a gratuity, such as a message, feedback rating, money, or another unsolicited gift. Accordingly, it may be desirable to provide a system and method for facilitating these gratuitous, unsolicited transactions.

### BRIEF SUMMARY OF SOME EXAMPLES

Some example embodiments provide a method of initiating an unsolicited transaction with an entity is provided. The method comprises receiving a beacon signal from a beacon device which includes identification information associated with an entity. The identification information is used to establish a wireless connection with a third party and initiate an unsolicited transaction with the entity via the third party.

In another example embodiment, a system for facilitating an unsolicited transaction with an entity is provided. The system comprises a client device for receiving a beacon signal from a beacon device which includes identification information associated with an entity. The system further comprises an application server that uses the identification information to establish a wireless connection with a third party and initiate an unsolicited transaction with the entity via the third party.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system that may be useful in connection with facilitating gratuitous transactions according to an example embodiment;
FIG. 2 illustrates a functional block diagram of an apparatus that may be useful in connection with facilitating gratuitous transactions according to an example embodiment;
FIG. 3 illustrates an example operating scenario in which a mobile device may perform an example embodiment;
FIG. 4 is a screenshot of a recipient-selection screen according to an example embodiment;
FIG. 5 is a screenshot of a gratuity-input screen according to an example embodiment; and
FIG. 6 illustrates a method for executing a gratuitous transaction according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout.

As indicated above, some embodiments of the present invention may relate to facilitating gratuitous transactions. As such, some example embodiments may provide a tool for receiving a beacon signal including information identifying an entity, and initiating an unsolicited transaction with that entity via a third party. Example embodiments present a scenario where the customer initiates an automated transaction to uniquely identify a service provider and provide an unsolicited gift or gratuity. In contrast to a typical transaction where the vendor "takes" from the customer in exchange for goods or services, example embodiments allow the customer to "give" to a vendor. Furthermore, this concept can be extended to an automated means of providing real-time, localized donations to a charity or church, or to various other entities or service providers.

As will be discussed in more detail below, the automated process is facilitated through the use of localized beacons that identify potential recipients of the gift, gratuity, or donation. These beacons provide a means to uniquely identify the recipient and a means for the recipient to acknowledge the gift, gratuity, or donation. Through an electronic application on a phone or tablet, the customer (or giver) of the gratuity is able to discover a beacon associated with a target recipient and select the recipient to initiate the transaction. Example embodiments may therefore facilitate a communication channel via which a gratuitous transaction may be initiated with a target organization through a third party.

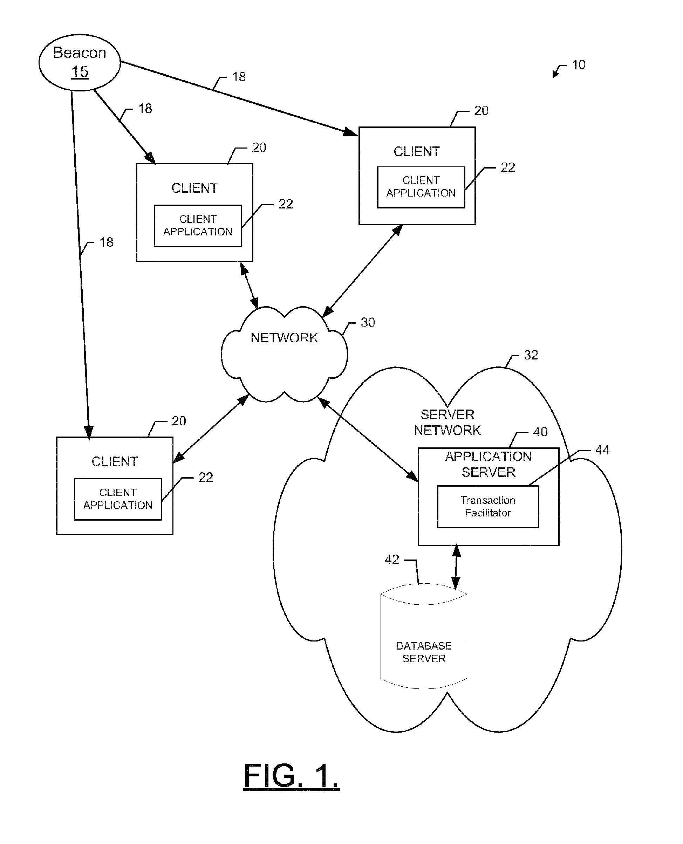

An example embodiment of the invention will now be described in reference to FIG. 1. As shown in FIG. 1, a system 10 according to an example embodiment may include a beacon 15 configured to send a beacon signal 18 to one or more client devices (e.g., clients 20). The beacons 15 may, in some cases, each be associated with a single organization, department within an organization, or location (i.e., with each one of the beacons 15 being associated with an individual analyst of an organization, department, or location). However, in some embodiments, each of the beacons 15 may be associated with different corresponding individuals, locations, departments, or organizations. For example, among the beacons 15, one beacon may be associated with a first facility of a first organization and one or more of the other beacons may be associated with a second facility of either the first organization or of another organization. In some applications, the beacon can be fully mobile (with an internal power source), while in others it may be fixed (with an external power supply and possibly an external data connection to the Internet).

The examples described herein will be related to clients 20 which are mobile devices, such as mobile phones or tablets, which may be carried by a person. Any reference to mobile devices, however, should not be limiting in scope, as the clients 20 could also be any fixed device capable of wireless communication. In any case, each one of the clients 20 may include or otherwise be embodied as computing device (e.g., a computer, a network access terminal, a personal digital assistant (PDA), cellular phone, smart phone, or the like) capable of communication with or over a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, one or more of the clients 20 may include a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30. Moreover, in some embodiments, the information or services that are requested via the network may be provided in a software as a service (SAS) environment. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for processing instructions to execute a particular application.

Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced in connection with a single client connected to the system 10. Similarly, the system 10 may comprise one or more beacons 15, each of which may communicate with any of the one or more client devices 20.

The network 30 may be a data network, such as a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions.

In some embodiments, for example, the application server 40 may therefore include an instance of transaction facilitator 44 comprising stored instructions for handling activities associated with practicing example embodiments as described herein. However, it should be appreciated that the transaction facilitator 44 could be a standalone device in some cases, so it need not be a part of a server or a server network. In some cases, the transaction facilitator 44 may be employed to facilitate unsolicited transactions. It should be noted that the transaction facilitator 44 is not merely an automated tool for exchange of money. Instead, the transaction facilitator 44 is a communication tool that establishes a unique way to communicate with other entities to initiate a transaction between them. The transaction may involve a gratuitous transaction of money. However, the way the transaction of money occurs may be in accordance with any of a number of different (perhaps conventional) methods. Meanwhile, the communication paradigm, together with the software that configures corresponding hardware into tools for implementation of the communication paradigm, uniquely creates a context in which a trusted platform by which to conduct the activities described herein can be provided.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the transaction facilitator 44 configured to operate in accordance with an example embodiment of the present invention. In this regard, for example, the transaction facilitator 44 may include software for enabling the application server 40 to communicate with the network 30 and/or the clients 20 for the provision and/or receipt of information associated with performing activities as described herein. Moreover, in some embodiments, the application server 40 may include or otherwise be in wireless communication with clients 20 to allow interaction with the network 30. As such, the environment of FIG. 1 illustrates an example in which a gratuitous may be facilitated as described herein.

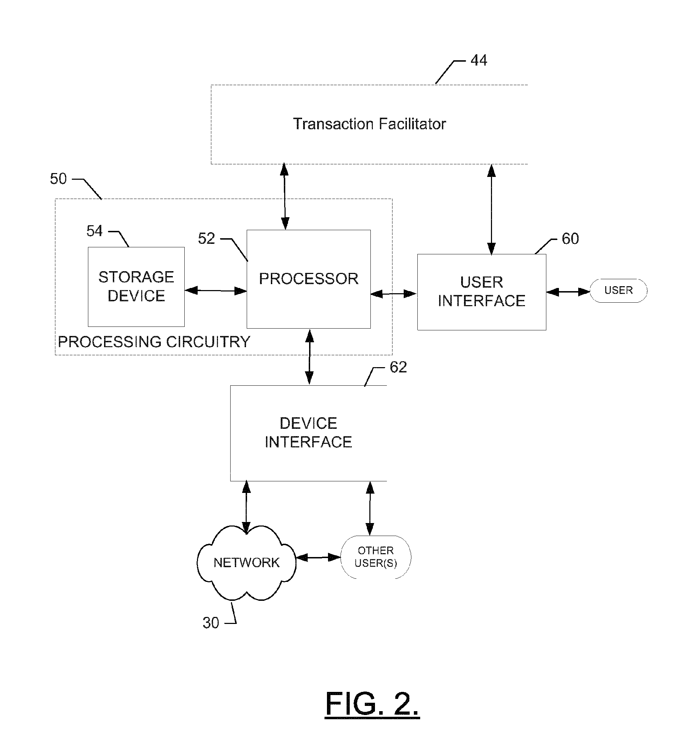

An example embodiment of the invention will now be described with reference to FIG. 2. FIG. 2 shows certain elements of an apparatus for facilitating gratuitous transactions described herein according to an example embodiment. The apparatus of FIG. 2 may be employed, for example, on a device such as, for example, a network device, server, proxy, or the like (e.g., the application server 40 of FIG. 1) at which the transaction facilitator 44 may be instantiated. Alternatively, embodiments may be employed on a combination of devices. Accordingly, some embodiments of the present invention may be embodied wholly at a single device (e.g., the application server 40) or in a distributed environment (e.g., at a plurality of servers of the server network 32). Furthermore, it should be noted that the devices or elements described below may not be mandatory and thus some may be omitted in certain embodiments.

Referring now to FIG. 2, an apparatus for facilitating gratuitous transactions in accordance with an example embodiment is provided. The apparatus may be an embodiment of the transaction facilitator 44 or a device hosting the transaction facilitator 44. As such, configuration of the apparatus as described herein may transform, upon being programmed and configured accordingly, the apparatus into the transaction facilitator 44. In an example embodiment, the apparatus may include or otherwise be in communication with processing circuitry 50 that is configured to perform data processing, application execution and other processing and management services according to an example embodiment of the present invention. In one embodiment, the processing circuitry 50 may include a storage device 54 and a processor 52 that may be in communication with or otherwise control a user interface 60 (which may be optional) and a device interface 62. As such, the processing circuitry 50 may be embodied as a circuit chip (e.g., an integrated circuit chip) configured (e.g., with hardware, software or a combination of hardware and software) to perform operations described herein. However, in some embodiments, the processing circuitry 50 may be embodied as a portion of a server, computer, laptop, workstation or even one of various mobile computing devices. In situations where the processing circuitry 50 is embodied as a server or at a remotely located computing device, the user interface 60 (if employed at all) may be disposed at another device (e.g., at a computer terminal or client device such as one of the clients 20) that may be in communication with the processing circuitry 50 via the device interface 62 and/or a network (e.g., network 30).

The user interface 60 (if employed) may be in communication with the processing circuitry 50 to receive an indication of a user input at the user interface 60 and/or to provide an audible, visual, mechanical or other output to the user. As such, the user interface 60 may include, for example, a keyboard, a mouse, a joystick, a display, a touch screen, a microphone, a speaker, a cell phone, or other input/output mechanisms. In embodiments where the apparatus is embodied at a server or other network entity, the user interface 60 may be limited or even eliminated in some cases. Alternatively, as indicated above, the user interface 60 may be remotely located.

The device interface 62 may include one or more interface mechanisms for enabling communication with other devices and/or networks. In some cases, the device interface 62 may be any means such as a device or circuitry embodied in either hardware, software, or a combination of hardware and software that is configured to receive and/or transmit data from/to a network and/or any other device or module in communication with the processing circuitry 50. In this regard, the device interface 62 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 62 communicates with a network, the network may be any of various examples of wireless or wired communication networks such as, for example, data networks like a Local Area Network (LAN), a Metropolitan Area Network (MAN), and/or a Wide Area Network (WAN), such as the Internet.

In an example embodiment, the storage device 54 may include one or more non-transitory storage or memory devices such as, for example, volatile and/or non-volatile memory that may be either fixed or removable. The storage device 54 may be configured to store information, data, applications, instructions or the like for enabling the apparatus to carry out various functions in accordance with example embodiments of the present invention. For example, the storage device 54 could be configured to buffer input data for processing by the processor 52. Additionally or alternatively, the storage device 54 could be configured to store instructions for execution by the processor 52. As yet another alternative, the storage device 54 may include one of a plurality of databases (e.g., database server 42) that may store a variety of files, contents or data sets. Among the contents of the storage device 54, applications (e.g., client application 22 or service application 42) may be stored for execution by the processor 52 in order to carry out the functionality associated with each respective application.

The processor 52 may be embodied in a number of different ways. For example, the processor 52 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 52 may be configured to execute instructions stored in the storage device 54 or otherwise accessible to the processor 52. As such, whether configured by hardware or software methods, or by a combination thereof, the processor 52 may represent an entity (e.g., physically embodied in circuitry) capable of performing operations according to embodiments of the present invention while configured accordingly. Thus, for example, when the processor 52 is embodied as an ASIC, FPGA or the like, the processor 52 may be specifically configured hardware for conducting the operations described herein. Alternatively, as another example, when the processor 52 is embodied as an executor of software instructions, the instructions may specifically configure the processor 52 to perform the operations described herein.

In an example embodiment, the processor 52 (or the processing circuitry 50) may be embodied as, include or otherwise control the transaction facilitator 44, which may be any means such as a device or circuitry operating in accordance with software or otherwise embodied in hardware or a combination of hardware and software (e.g., processor 52 operating under software control, the processor 52 embodied as an ASIC or FPGA specifically configured to perform the operations described herein, or a combination thereof) thereby configuring the device or circuitry to perform the corresponding functions of the transaction facilitator 44 as described below.

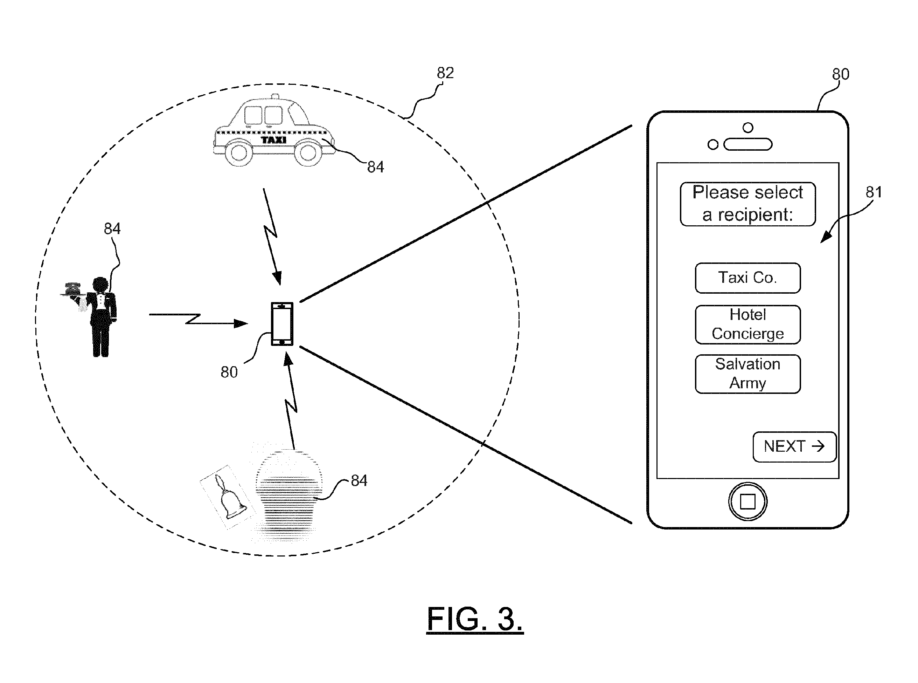

An example operating scenario in which the transaction facilitator 44 may perform an example embodiment will now be described in reference to FIGS. 3-5. In this regard, a mobile device 80 may be an example of one of the clients 20. The mobile device 80 may be executing an application 81 that may be an example of client applications 22. The mobile device 80 may have access to a network 30 which may supply data to the mobile device 80 via a WiFi connection, although other wireless communication protocols may be employed in other embodiments. An application server 40 may be an example of a device at which the transaction facilitator 44 may be hosted, and the application server 40 may be connected to the network 30 via an Ethernet connection.

Referring now specifically to FIG. 3, a customer can initiate a gratuitous transaction by opening up an application on their mobile device 80, such as a phone or tablet, and sending out a polling signal for beacons. The polling signal may be, for example, a radio frequency signal from a short range communication device (e.g., a radio frequency identification (RFID) transponder, Bluetooth, WiFi, and/or the like) or any other suitable wireless signal. The polling signal can communicate with beacons in the vicinity of the mobile device 80, in this case referred to as the polling area (as indicated by dotted line 82). In the example embodiment, the beacons (referred to generally as 84) within the polling area 82 are associated with three entities: a taxi cab company, a hotel concierge service, and a Salvation Army donation stand. When the beacons 84 receive the polling signal, they wirelessly transmit identification information to the phone or tablet 80. This identification information may include a variety of information such as, for example, entity information like a company name, employee identification, etc. The information may further include a list of company employees who are assigned a beacon. However, at a basic level, the identification information may simply be an identifier that can be correlated with an entity (e.g., via a list stored in the database server 42 that includes participating entities and corresponding identifiers) that allows the transaction facilitator 44 to generate user interface components to allow the user to identify a target and initiate a transaction with the target via the transaction facilitator 44.

Although the method of initiating a transaction described above is initiated by the polling signal, there are numerous ways in which the beacon 84 and mobile device 80 can establish communication. For example, the beacon 15 may be configured to broadcast, listen, or transmit when polled. In the example discussed above with respect to FIG. 3, the beacon 15 responded to the polling signal from a mobile device 80-i.e. it was remotely requested to transmit information. In another embodiment, the beacon 15 can be a radio transceiver (such as Bluetooth, WiFi, RFID, etc ...) that can automatically transmit identification and location information without being polled.

Beacons can be designed to broadcast in a manner such that they can be identified by all potential customers (similar to a WLAN identifier that can be sensed by all WiFi users in a given area) or they can be effectively "hidden" from common view and be accessible to select members of a particular group of organization. In an open system, all potential customers can identify all potential recipients. In a closed or partially-closed system, a select group of customers are able to identify a select group of recipients. For example, through a combination of MAC addresses and User-specific Identification Data (UID), a beacon can be labeled as a member of a particular group (such as a hotel chain, frequent flyer program, or customer rewards program). A customer member of this group would be able to access the UID information and associated MAC addresses to identify the intended recipient. The database can be part of the application on the customer's portable device or remotely accessed to a central database for the intended group. The selection between open and closed networks depends on the intended business model of the system. Furthermore, the security of the transaction between the customer and receiver can be augmented through the incorporation of unique codes, Personal Identification Numbers (PIN), or transaction receipt codes.

In general, the presented system facilitates the transfer of a gift, gratuity, or donation. These items can be in the form of a real-time monetary transaction (processed through common PoS system such as PayPal, Google, etc.), through third party applications (such as a hotel invoicing or non-monetary customer loyalty rewards programs), or through any other suitable payment intermediary. Money may also be transferred by providing the entity an authorization to access an account or money order for withdrawal.

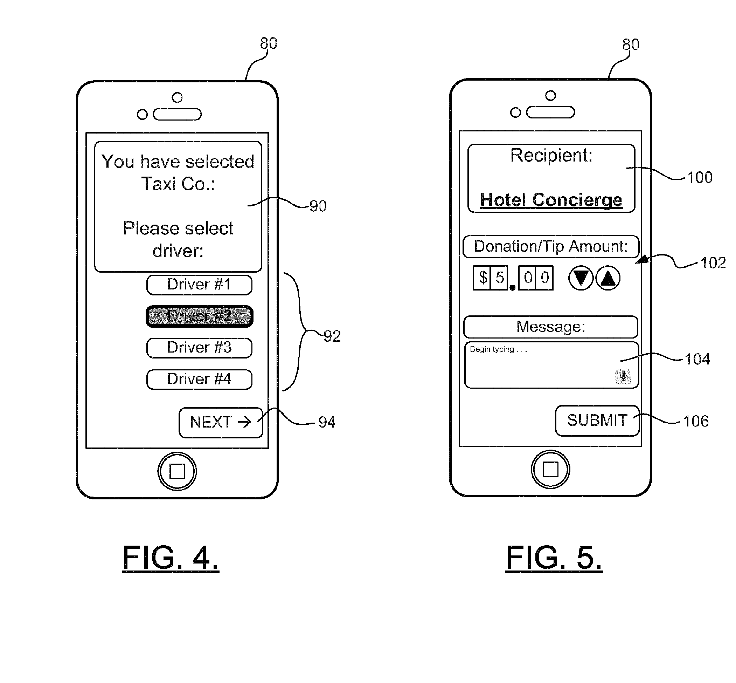

In some example embodiments, each potential recipient of a gratuity may possess their own beacon which uniquely identifies that recipient. Alternatively, a business entity may have multiple beacons, each of which identify the business, but not the individual who is the intended recipient. In such a situation, the customer may elect to provide a gratuity to the business to be distributed among all potential individual recipients associated with that business, or may select an individual within that business to receive the gratuity. FIG. 4 shows an example embodiment of a selection screen where a customer may make such a selection. In this example, the customer's phone 80 has identified a beacon associated with Taxi Co. and the customer has selected Taxi Co. and the selection is displayed in the entity selection pane 90. In some embodiments, the customer may wish to provide a gratuity directly to the driver instead of to Taxi Co. The customer may make such a selection by selecting an individual driver from the driver dropdown selection list 92. By selecting the specific drivers name, badge number, or other identification indicia, and pressing the "next" button 94, the customer can identify the intended individual recipient from all company employees. The gratuity can then be transferred directly from the customer to the driver (e.g., directly to bank account or driver's mobile device). Alternatively, all gratuities can be provided to Taxi Co. directly, and can be routed to the individual driver in a periodic report, paycheck, etc. This would allow a company to track an employees performance, customer ratings, or received monetary donations, for example.

Once an intended recipient has been selected, a gratuity input screen can be generated. FIG. 5 is an example of such a screen. The selected recipient may be displayed at the top of the screen in an intended recipient box 100. The customer may enter a monetary donation using the donation selector 102. The customer may also use the message generator 104 to leave a message, rating, or other feedback for the recipient (or his/her employer). The message may be a voice recording, a text message, or other method of communication. The message could also be in the form of a rating system (e.g., selection of one to five stars) or the results of a survey. The message may be provided in addition to or as an alternative to a money transfer. After inputting the desired gratuity, the customer may press the "submit" button 106 to complete the unsolicited transaction and transfer the gratuity.

Although FIGS. 3-5 show example screenshots of example embodiments, it should be appreciated that many other user interfaces and capabilities are contemplated and are within the scope of the present invention. In this regard, the screenshots are only intended to demonstrate one possible interaction customers may have when using example applications on their mobile devices. Changes in the interaction may be effected by the customer, by the recipient, or by a third party. For example, the customer can adjust the prompts received by adjusting their application settings. Alternatively, or in addition, the recipient might control whether the customer can leave a monetary donation, a message, a rating, or other feedback, by providing interaction information along with the original identification information, for example.

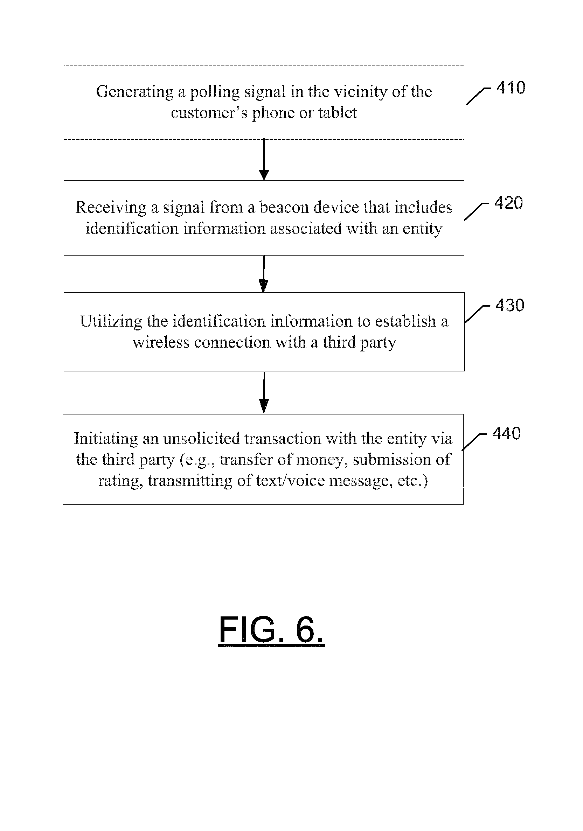

From a technical perspective, the transaction facilitator 44 described above may be used to support some or all of the operations described above. As such, the platform described in FIGS. 1-2 may be used to facilitate the implementation of several computer program and/or network communication based interactions. As an example, FIG. 6 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method according to one embodiment of the invention, as shown in FIG. 6, may include at optional step 410, generating a polling signal (e.g. from a mobile device 80) which may cause beacons (such as beacon 15) within the polling radius to respond by transmitting a beacon signal. At step 420, the mobile device 80 may receive the beacon signal which may include, among other information, identification information for the potential recipient of the gratuitous transaction as well as information necessary for facilitating the transfer of information or money. The identification information received may be used to establish a wireless connection with a third party and allow for the transfer of messages, ratings, monetary donations, etc. at step 430. As such, for example, the mobile device 80 may use the identification information to convey such information to a third party (via the wireless connection) to identify the entity. The third party may therefore include means by which to locate and/or conduct a transaction with the entity based on the identification information. However, in various alternatives, the mobile device 80 may actually use the identification information in order to connect (e.g., wirelessly) to the third party itself, and then identify the entity to initiate the transaction separately after the connection is made. At step 440, the mobile device 80 may be used to initiate an unsolicited transaction with the entity via a third party (e.g., authorizing a money transfer or charge to a credit card account).

In an example embodiment, an apparatus for performing the method of FIG. 6 above may comprise a processor (e.g., the processor 52) or processing circuitry configured to perform some or each of the operations (400-440) described above. The processor may, for example, be configured to perform the operations (400-440) by performing hardware implemented logical functions, executing stored instructions, or executing algorithms for performing each of the operations. In some embodiments, the processor or processing circuitry may be further configured for additional operations or optional modifications to operations 400 to 440.

In some example embodiments, the unsolicited transaction is the transfer of money from an account with the third party, or alternatively from a credit card registered with the third party. Other example embodiments further comprise providing a message. In some embodiments, the step of receiving a beacon signal from a beacon device comprises receiving a signal from a short-range wireless transmitter. In another embedment, the step of utilizing the identification information to establish a wireless connection with a third party comprises contacting the third party via the Internet. In some embodiments, the beacon device may be mobile, while in others it may be fixed. In some example embodiments, the entity is a service provider and the transaction is a gratuity, and in others the entity is a charity and the transaction is a donation.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of initiating an unsolicited transaction with an entity, the method comprising:
receiving a beacon signal from a beacon device, the beacon signal including identification information associated with an entity;
utilizing the identification information to establish a wireless connection with a third party; and
initiating an unsolicited transaction with the entity via the third party.

2. The method of claim 1, wherein the unsolicited transaction is the transfer of money from an account with the third party and/or the unsolicited transaction is the transfer of money from a credit card registered with the third party and/or wherein the entity is a service provider and the transaction is a gratuity and/or wherein the entity is a charity and the transaction is a donation.

3. The method of claim 1, further comprising providing a message.

4. The method of claim 1, wherein the step of receiving a beacon signal from a beacon device comprises receiving a signal from a short-range wireless transmitter.

5. The method of claim 1, wherein the step of utilizing the identification information to establish a wireless connection with a third party comprises contacting the third party via the Internet.

6. The method of claim 1, wherein the beacon device is mobile.

7. The method of claim 1, wherein the beacon device is fixed.

8. An apparatus for facilitating an unsolicited transaction with an entity, the apparatus comprising processing circuitry configured to:
receive a beacon signal from a beacon device, the beacon signal including identification information associated with an entity;
utilize the identification information to establish a wireless connection with a third party; and
initiate an unsolicited transaction with the entity via the third party.

9. The apparatus of claim 8, wherein the unsolicited transaction is the transfer of money from an account with the third party and/or the unsolicited transaction is the transfer of money from a credit card registered with the third party and/or wherein the entity is a service provider and the transaction is a gratuity and/or wherein the entity is a charity and the transaction is a donation.

10. The apparatus of claim 8, wherein the processing circuitry is further configured to provide a message.

11. The apparatus of claim 8, wherein the processing circuitry is further configured to receive a signal from a short-range wireless transmitter.

12. The apparatus of claim 8, wherein the processing circuitry is further configured to contact the third party via the Internet.

13. The apparatus of claim 8, wherein the beacon device is mobile.

14. The apparatus of claim 8, wherein the beacon device is fixed.
